# EUROPEAN PATENT APPLICATION

(11) **EP 4 825 587 A1**
(43) Date of publication of application: **21.10.2026**
(21) Application number: 26172517.0
(22) Date of filing: 15.04.2026
(51) Int. Cl.: B41J 2/14, B41J 2/16

(54) **LIQUID EJECTING HEAD AND TWO-LIQUID MIXED GLUE**

(30) Priority: 17.04.2025 JP 2025067997
(71) Applicant: Seiko Epson Corporation, Tokyo 160-8801 (JP)
(72) Inventor: KOGANEHIRA, Shuichi, Suwa-shi, 392-8502 (JP)
(74) Representative: Lewis Silkin LLP

(57) **Abstract**

A liquid ejecting head includes a cured substance of a two-liquid mixed glue. The two-liquid mixed glue contains a liquid A containing a main agent containing an epoxy resin and 3,4-dihydrocoumarin, and a liquid B containing an aromatic amine polymer, an alkylphenol, and bis(aminomethyl)norbornane. The alkylphenol is an alkylphenol (a) containing at least one ethyl group or an alkylphenol (b) in which the alkyl group has 1 to 3 carbon atoms and which contains at least one methyl group and one isopropyl group. The ratio of an ester equivalent of 3,4-dihydrocoumarin to a phenol equivalent of the alkylphenol is 4.0 or more and 12.0 or less.

## Description

The present application is based on, and claims priority from JP Application Serial Number 2025-067997, filed April 17, 2025, the disclosure of which is hereby incorporated by reference herein in its entirety.

### BACKGROUND

### 1. Technical Field

The present disclosure relates to a liquid ejecting head and a two-liquid mixed glue.

### 2. Related Art

In the related art, a resin material is used for producing a liquid ejecting head. For example, JP-A-2017-35809 describes that a sealing agent which is a resin material is used for sealing an electrical coupling portion between a recording element substrate including a discharge energy generating element that discharges a liquid and an electrical wiring member for transmitting a signal to the recording element substrate. JP-A-2017-35809 describes that in the sealing agent, a bisphenol type epoxy resin can be used as a main agent, and an aliphatic amine can be used as a curing agent. In addition, JP-A-2017-35809 describes specific examples in which the resin material is used as a sealing agent, but the applications of such a resin material are not limited to a sealing agent, and the resin material can also be used, for example, as a glue.

Meanwhile, a glue used for a liquid ejecting head is required to have excellent liquid resistance such as acid resistance with respect to a liquid to be ejected and to be cured at a low temperature when applied to bond members constituting the liquid ejecting head to each other.

However, in an epoxy glue of the related art, a highly reactive bisphenol type epoxy resin is used as a main agent, and a highly reactive aliphatic amine is used as a curing agent, and thus, the liquid resistance is insufficient even though the epoxy glue is cured at a low temperature. Further, bisphenol is not preferable from the viewpoint of environmental load.

As described above, there is a demand for a glue that reduces the environmental load, has excellent liquid resistance, and is cured at a low temperature when applied to bond the members constituting the liquid ejecting head to each other. The same problem of course exists for members that are required to satisfy the same requirements as described above, other than the liquid ejecting head.

### SUMMARY

According to an aspect of the present disclosure, there is provided a liquid ejecting head that ejects a liquid from a nozzle. The liquid ejecting head includes a first member, a second member, and a cured substance of a two-liquid mixed glue that glues the first member and the second member to each other, wherein the two-liquid mixed glue contains a liquid A containing a main agent containing an epoxy resin that does not contain bisphenol and 3,4-dihydrocoumarin, and a liquid B containing an aromatic amine polymer, an alkylphenol, and at least one of 2,5-bis(aminomethyl)bicyclo[2.2.1]heptane and 2,6-bis(aminomethyl)bicyclo[2.2.1]heptane, the alkylphenol is an alkylphenol (a) containing at least one ethyl group or an alkylphenol (b) in which the alkyl group has 1 to 3 carbon atoms and which contains at least one methyl group and one isopropyl group, and a ratio of an ester equivalent of the 3,4-dihydrocoumarin to a phenol equivalent of the alkylphenol is 4.0 or more and 12.0 or less.

### BRIEF DESCRIPTION OF THE DRAWINGS

FIG. 1 is a schematic view showing a schematic configuration of a liquid ejecting apparatus according to an embodiment.
FIG. 2 is a perspective view showing a head module.
FIG. 3 is an exploded perspective view showing a liquid ejecting head.
FIG. 4 is a cross-sectional view taken along line IV-IV of FIG. 3.
FIG. 5 is a cross-sectional view showing an ejecting unit.
FIG. 6 is a table showing a list of components used in tests.
FIG. 7 is a table showing Chemical Formula (f1) and Chemical Formula (f2).
FIG. 8 is a view for explaining an evaluation method.
FIG. 9 is a table showing the equivalent ratios and the mass ratios of Test Example 1 to Test Example 5.
FIG. 10 is a table showing the equivalent ratios and the mass ratios of Test Example 6 to Test Example 12.
FIG. 11 is a table showing the equivalent ratios and the mass ratios of Test Example 13 to Test Example 16.
FIG. 12 is a table collectively showing the evaluation results of Test Example 1 to Test Example 12.
FIG. 13 is a table collectively showing the evaluation results of Test Example 13 to Test Example 16.

### DESCRIPTION OF EMBODIMENTS

### A. Embodiment:

### A1. Overall Configuration of Liquid Ejecting Apparatus:

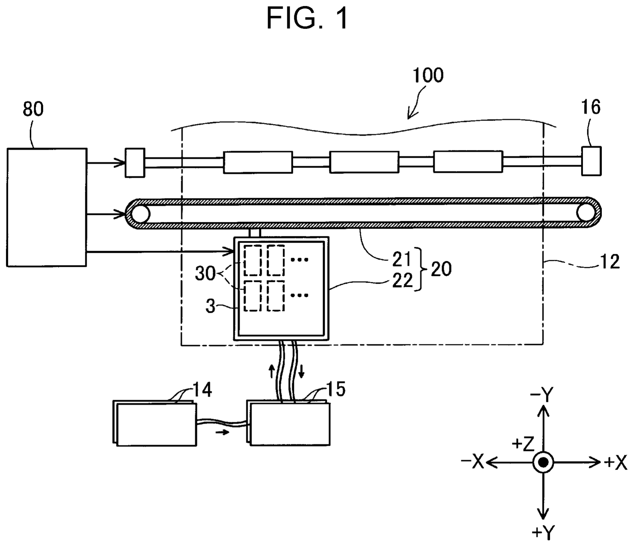

FIG. 1 is a schematic view showing a schematic configuration of a liquid ejecting apparatus 100 according to an embodiment. The liquid ejecting apparatus 100 is an ink jet type printing device that performs printing by ejecting ink droplets as a liquid onto a medium 12. A printing target made of any material such as a resin film or cloth can be employed as the medium 12 in addition to printing paper. In the following description, an X direction, a Y direction, and a Z direction that are orthogonal to each other are used. Further, when the orientation is specified, the positive direction is defined as "+" and the negative direction is defined as "-", and the positive and negative signs are used in combination in the direction notation. In the present embodiment, the X direction is a main scanning direction which is a moving direction of a liquid ejecting head 30. The Y direction is a sub-scanning direction which is a medium feeding direction orthogonal to the main scanning direction. The -Z direction is an ejection direction of an ink. In the following description, the +Z direction may be referred to as upward, and the -Z direction may be referred to as downward.

The liquid ejecting apparatus 100 includes a head module 3, a head moving mechanism 20, a plurality of liquid accommodating portions 14, a plurality of sub-tanks 15, a transport mechanism 16, and a controller 80. The head module 3 has a plurality of liquid ejecting heads 30.

Each liquid accommodating portion 14 accommodates an ink to be supplied to the head module 3. As the liquid accommodating portion 14, a bag-shaped liquid pack formed of a flexible film, an ink tank that can replenish an ink, a detachable ink cartridge, and the like can be used.

An aqueous pigment ink, a solvent ink, an ultraviolet curable ink, or the like can be used as the ink. The ultraviolet curable ink is also referred to as a UV ink. Further, when cloth is used as the medium 12, an acidic pretreatment ink containing an organic acid such as citric acid, malic acid, or malonic acid may be used as the ink. When the pretreatment ink is discharged onto cloth, the pretreatment ink reacts with an ink of a coloring material to be discharged thereafter and specifically, causes aggregation of a dye or pigment which is the coloring material. Therefore, the pretreatment ink has an effect of suppressing penetration of the ink of the coloring material and suppressing bleeding of the coloring material.

Each of the sub-tanks 15 is coupled to the liquid accommodating portion 14 by a tube through which the ink is circulated. In addition, each of the sub-tanks 15 is coupled to the head module 3 by a first tube for supplying ink to the head module 3 and a second tube for returning the ink from the liquid ejecting head 30 to the sub-tank 15. The ink is supplied to each of the sub-tanks 15 from the liquid accommodating portion 14, and the ink is returned from the head module 3. Further, the ink circulates between the sub-tank 15 and the head module 3.

In the following description, a case where the liquid ejecting apparatus 100 includes two liquid accommodating portions 14 and two sub-tanks 15 will be described as an example. In the present embodiment, inks of different colors are accommodated in each of the two liquid accommodating portions 14. In order to distinguish between these two inks, the ink accommodated in one liquid accommodating portion 14 is referred to as a first ink, and the ink accommodated in the other liquid accommodating portion 14 is referred to as a second ink. Further, the liquid ejecting apparatus 100 may include one or three or more liquid accommodating portions 14. In addition, the inks accommodated in each of the two liquid accommodating portions 14 may be inks of the same color.

The head module 3 has a plurality of nozzles N (described below) for ejecting the ink. The head module 3 ejects the inks to be supplied from the liquid accommodating portions 14 from the plurality of nozzles N toward the medium 12.

The head moving mechanism 20 includes a transport belt 21 and a carriage 22 that accommodates the head module 3. The carriage 22 is coupled to the transport belt 21 and reciprocates in the X direction as the transport belt 21 is driven. The transport mechanism 16 transports the medium 12 in the +Y direction.

The controller 80 includes processing circuits such as one or a plurality of central processing units (CPUs) and field programmable gate arrays (FPGAs) and storage circuits such as a semiconductor memory, and controls the operation of the entire liquid ejecting apparatus 100. The controller 80 is electrically coupled to the transport mechanism 16, the head moving mechanism 20, and the liquid ejecting head 30, and controls each section. An image is printed on the medium 12 by ejecting the liquid from the nozzles N to the medium 12 transported by the transport mechanism 16.

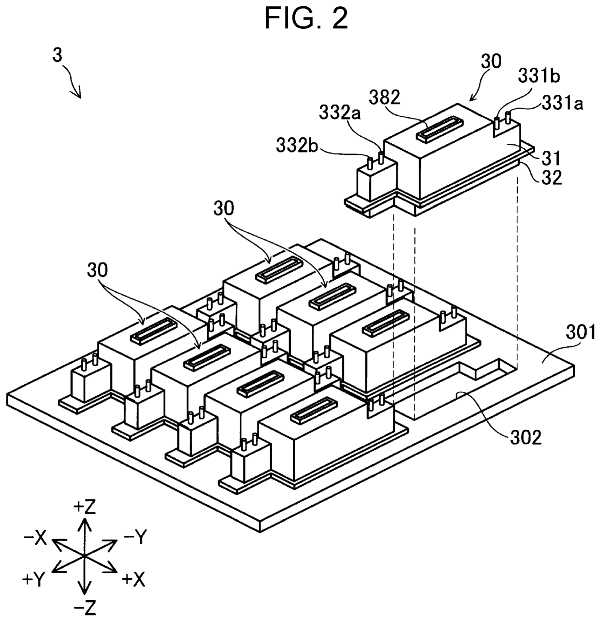

FIG. 2 is a perspective view of the head module 3. As shown in FIG. 2, the head module 3 includes a support 301 and a plurality of the liquid ejecting heads 30. In the present embodiment, the head module 3 includes eight liquid ejecting heads 30. Further, the number of liquid ejecting heads 30 included in the head module 3 is not limited to eight, and may be, for example, one.

The support 301 is a plate-shaped member that supports the plurality of liquid ejecting heads 30. The support 301 has a plurality of mounting holes 302. Each liquid ejecting head 30 is supported by the support 301 in a state of being fitted in the mounting hole 302. The plurality of liquid ejecting heads 30 are arranged in a matrix.

### A2. Configuration of Liquid Ejecting Head:

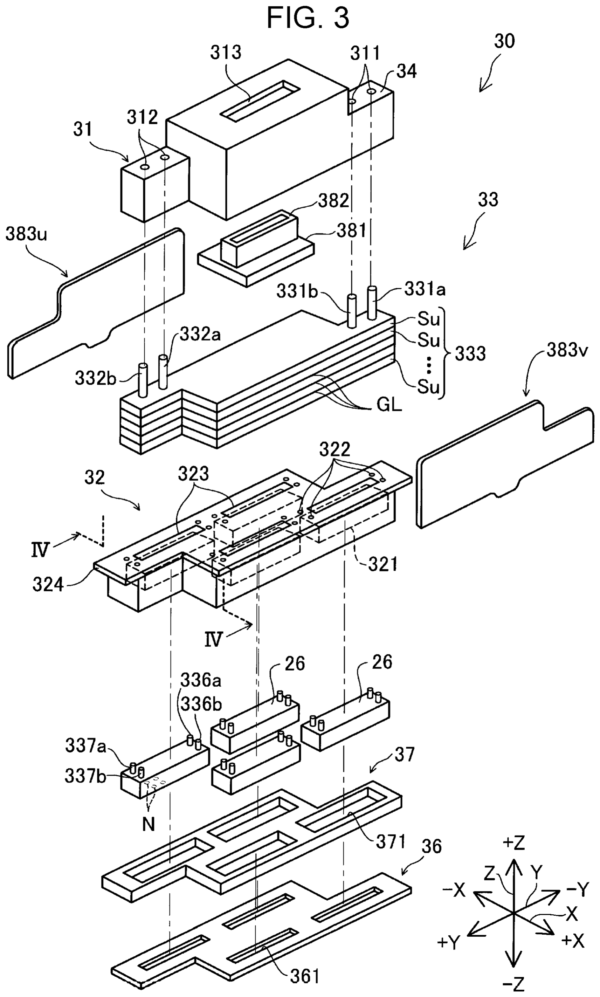

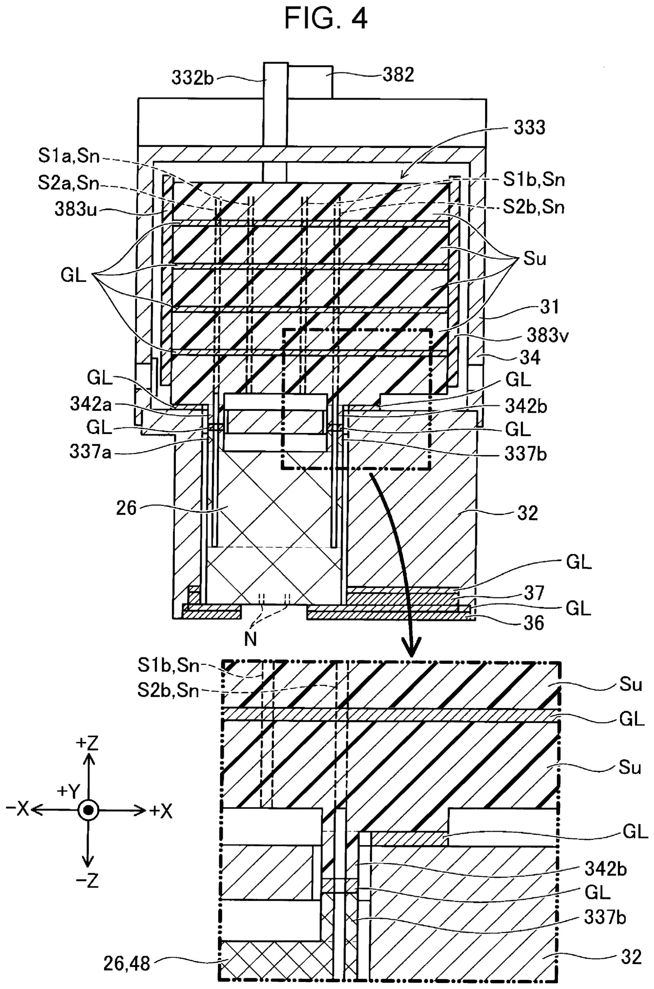

FIG. 3 is an exploded perspective view showing the liquid ejecting head 30. FIG. 4 is a cross-sectional view taken along line IV-IV of FIG. 3. The line IV-IV passes through the center of a holder first through-hole 322 described below. As shown in FIG. 3, the liquid ejecting head 30 includes a cover member 31, a holder member 32, a flow path structure 33, a fixing plate 36, a reinforcing plate 37, a plurality of ejecting units 26, a wiring substrate 381, a wiring member 382, a first circuit substrate 383u, and a second circuit substrate 383v. In the present embodiment, the liquid ejecting head 30 has four ejecting units 26.

The fixing plate 36 is a plate member for fixing the plurality of ejecting units 26 to the holder member 32. In the present embodiment, the material of the fixing plate 36 is stainless steel. The fixing plate 36 has a plurality of opening portions 361 for exposing the nozzles N formed at the lower surface of each ejecting unit 26.

The reinforcing plate 37 is a plate member for reinforcing the fixing plate 36. In the present embodiment, the material of the reinforcing plate 37 is stainless steel. The reinforcing plate 37 is fixed to the fixing plate 36 by a cured substance GL of a glue described below. Similar to the fixing plate 36, the reinforcing plate 37 has a plurality of opening portions 371 for exposing the nozzles N formed at the lower surface of each ejecting unit 26.

The ejecting unit 26 includes the nozzles N, a case first supply pipe 336a, a case first discharge pipe 337a, a case second supply pipe 336b, and a case second discharge pipe 337b. The details of the ejecting unit 26 will be described below.

The holder member 32 includes a plurality of accommodating portions 321, a plurality of holder first through-holes 322, and a plurality of holder second through-holes 323. The material of the holder member 32 is, for example, a metal such as stainless steel. Each of the accommodating portions 321 is formed to protrude downward from a plate-shaped flange 324 of the holder member 32. The lower side of each accommodating portion 321 is open. Each accommodating portion 321 accommodates the ejecting unit 26. Each holder first through-hole 322 is a through-hole for inserting any of the case first supply pipe 336a, the case first discharge pipe 337a, the case second supply pipe 336b, and the case second discharge pipe 337b of the ejecting unit 26. Each holder second through-hole 323 is a through-hole for inserting a flexible substrate 51a described below.

The flow path structure 33 includes a laminate 333, an upper coupling portion 331a for first supply, an upper coupling portion 332a for first discharge, an upper coupling portion 331b for second supply, and an upper coupling portion 332b for second discharge. The laminate 333 is configured by laminating a plurality of flow path members Su. Each flow path member Su communicates with the nozzle and defines a structure flow path Sn described below, which is a flow path through which the liquid flows.

As shown in FIG. 4, the laminate 333 is configured such that two adjacent flow path members Su of the plurality of flow path members Su are bonded to each other by the cured substance GL of a glue. In the present embodiment, the material of each flow path member Su is a resin.

In the laminate 333, a structure flow path Sn for circulating the ink between the sub-tank 15 and the ejecting unit 26 is formed. The structure flow path Sn includes a laminate first supply flow path S1a, a laminate first discharge flow path S2a, a laminate second supply flow path S1b, and a laminate second discharge flow path S2b. The laminate first supply flow path S1a and the laminate first discharge flow path S2a are flow paths for circulating the first ink. The laminate second supply flow path S1b and the laminate second discharge flow path S2b are flow paths for circulating the second ink. The laminate first supply flow path S1a and the laminate second supply flow path S1b are flow paths through which the ink flows from the sub-tank 15 toward the ejecting unit 26. The laminate first discharge flow path S2a and the laminate second discharge flow path S2b are flow paths through which the ink flows from the ejecting unit 26 toward the sub-tank 15.

Each structure flow path Sn is configured by a groove formed at an upper surface or a lower surface of each flow path member Su and a through-hole penetrating in a thickness direction of each flow path member Su. Further, FIG. 4 shows the structure flow path Sn in a simplified manner.

As shown in FIG. 3, the upper coupling portion 331a for first supply, the upper coupling portion 332a for first discharge, the upper coupling portion 331b for second supply, and the upper coupling portion 332b for second discharge are provided on the upper surface of the laminate 333. Each of the upper coupling portion 331a for first supply, the upper coupling portion 332a for first discharge, the upper coupling portion 331b for second supply, and the upper coupling portion 332b for second discharge is coupled to each of the laminate first supply flow path S1a, the laminate first discharge flow path S2a, the laminate second supply flow path S1b, and the laminate second discharge flow path S2b.

The wiring substrate 381 and the wiring member 382 are mounting components for electrically coupling the controller 80 and the ejecting unit 26. In the wiring substrate 381, wiring and the like are formed. The wiring member 382 is a connector to which a signal cable (not shown) is coupled. Electronic circuits are formed on the first circuit substrate 383u and the second circuit substrate 383v. The first circuit substrate 383u and the second circuit substrate 383v are electrically coupled to the wiring substrate 381.

The cover member 31 accommodates the laminate 333, the wiring substrate 381, the wiring member 382, the first circuit substrate 383u, and the second circuit substrate 383. As the material of the cover member 31, for example, a resin or a metal can be used. The cover member 31 has two holes 311 for a first coupling portion, two holes 312 for a second coupling portion, and a first hole 313. The first hole 313 is a hole for inserting the wiring member 382. The upper coupling portion 331a for first supply or the upper coupling portion 331b for second supply is inserted into each of the two holes 311 for a first coupling portion. The upper coupling portion 332a for first discharge or the upper coupling portion 332b for second discharge is inserted into each of the two holes 312 for a second coupling portion.

Further, the material of the cover member 31 and the material of the holder member 32 are not limited to the description above. For example, the material of the holder member 32 may be a resin. Further, the material of the cover member 31 or the material of the holder member 32 may be, for example, carbon steel or a material obtained by combining a resin and a metal.

As shown in FIG. 4, the laminate 333, the wiring member 382, the first circuit substrate 383u, and the second circuit substrate 383v are accommodated inside the cover member 31. The ejecting unit 26 is accommodated inside the holder member 32. Further, the fixing plate 36 and the reinforcing plate 37 are disposed on the lower side of the holder member 32. The reinforcing plate 37, the fixing plate 36, and the holder member 32 are bonded to each other by the cured substance GL of a glue. The ejecting unit 26 is fixed to the holder member 32 by bonding the fixing plate 36 that supports the ejecting unit 26 from below and the holder member 32 to each other. The cover member 31 accommodating each of the above-described components and the holder member 32 accommodating each of the above-described components are coupled to each other to assemble the liquid ejecting head 30.

The flow path structure 33 further includes a lower coupling portion for first supply (not shown), a lower coupling portion 342a for first discharge, a lower coupling portion for second supply (not shown), and a lower coupling portion 342b for second discharge. The lower coupling portion for first supply, the lower coupling portion 342a for first discharge, the lower coupling portion for second supply, and the lower coupling portion 342b for second discharge are pipes having a flow path that circulates the ink, and are formed to protrude to the lower surface of the flow path member Su of the lowermost layer of the laminate 333. The flow path of each of the lower coupling portion for first supply (not shown), the lower coupling portion 342a for first discharge, the lower coupling portion for second supply (not shown), and the lower coupling portion 342b for second discharge communicates with each of the laminate first supply flow path S1a, the laminate first discharge flow path S2a, the laminate second supply flow path S1b, and the laminate second discharge flow path S2b.

As shown in an enlarged manner in FIG. 4, the flow path member Su of the lowermost layer of the laminate 333 and the upper surface of the holder member 32 are bonded to each other by the cured substance GL of a glue. In addition, the lower coupling portion 342b for second discharge and the case second discharge pipe 337b are bonded to each other by the cured substance GL of a glue. Each of the lower coupling portion for first supply (not shown), the lower coupling portion 342a for first discharge, and the lower coupling portion for second supply (not shown) which are the coupling portions other than the lower coupling portion 342b for second discharge is also bonded to each of the case first supply pipe 336a, the case first discharge pipe 337a, and the case second discharge pipe 337b by the cured substance GL of a glue in the same manner as described above.

### A3. Configuration of Ejecting Unit:

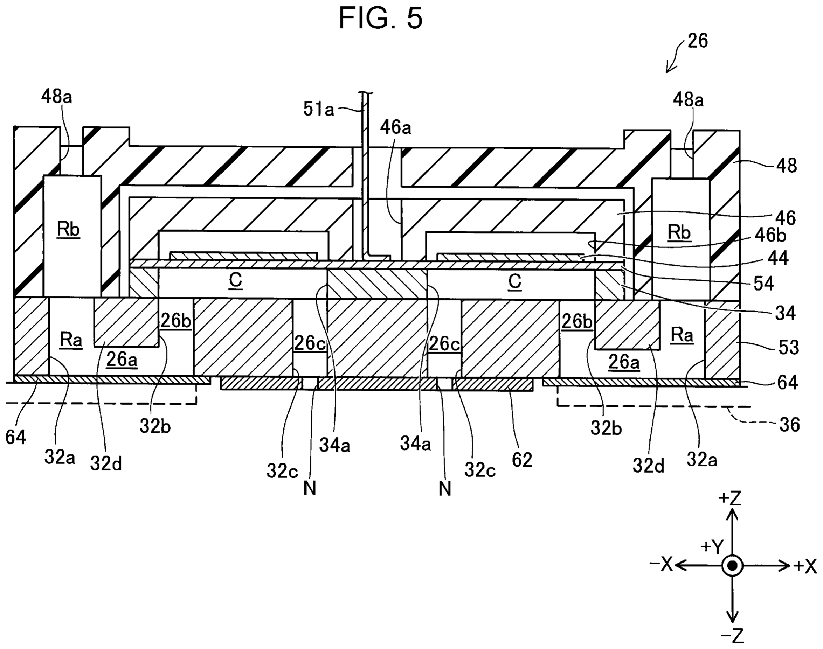

FIG. 5 is a cross-sectional view showing the ejecting unit 26. As shown in FIG. 5, the ejecting unit 26 includes a nozzle plate 62, two flow path sealing members 64, a flow path substrate 53, a pressure chamber substrate 34, a vibration plate 54, a sealing body 46, a housing portion 48, and a flexible substrate 51a. The nozzle plate 62, the flow path sealing member 64, the flow path substrate 53, the pressure chamber substrate 34, the vibration plate 54, and the sealing body 46 are plate-shaped members elongated in the Y direction. Each of the nozzle plate 62, the flow path substrate 53, the pressure chamber substrate 34, the vibration plate 54, and the sealing body 46 has a substantially line-symmetrical structure with respect to the center line in the X direction. The size of the planar shape of the pressure chamber substrate 34, the vibration plate 54, and the sealing body 46 is less than the size of the planar shape of the flow path substrate 53 and the housing portion 48. In a case of assembly, the nozzle plate 62, the two flow path sealing members 64, the flow path substrate 53, the pressure chamber substrate 34, the vibration plate 54, the sealing body 46, and the housing portion 48 are laminated in this order, and are bonded to each other by the cured substance GL of a glue (not shown).

The nozzle plate 62 is a plate-shaped member in which the plurality of nozzles N are formed. The nozzles N are through-holes having a substantially circular plane shape. The plurality of nozzles N are arranged in the Y direction. Two rows in which the plurality of nozzles N are arranged are provided, and the two rows are formed side by side in the X direction. The two flow path sealing members 64 are disposed to sandwich the nozzle plate 62 in the X direction. The material of each of the flow path sealing members 64 is, for example, stainless steel (SUS).

The flow path substrate 53, is, for example, a silicon substrate. The flow path substrate 53 has two first opening portions 32a, a plurality of second opening portions 32b, and a plurality of third opening portions 32c. The planar shape of the first opening portion 32a is a rectangular shape elongated in the Y direction. The first opening portion 32a is formed along the side of the flow path substrate 53 parallel to the Y direction. The plurality of second opening portions 32b are arranged in the Y direction. Similarly, the plurality of third opening portions 32c are arranged in the Y direction. The number of rows of the second opening portion 32b and the number of rows of the third opening portion 32c are each two. The first opening portion 32a, the rows of one second opening portion 32b, the rows of one third opening portion 32c, the rows of one third opening portion 32c, the rows of one second opening portion 32b, and the first opening portion 32a are formed side by side in this order in the X direction. Further, the second opening portion 32b and the third opening portion 32c adjacent to each other in the X direction are formed to have substantially the same position in the Y direction.

In the pressure chamber substrate 34, a plurality of opening portions 34a are formed. The planar shape of the opening portion 34a is a rectangular shape elongated in the X direction. The plurality of opening portions 34a are arranged in the Y direction. Two rows in which the plurality of opening portions 34a are arranged are provided, and the two rows are formed side by side in the X direction. Further, the opening portion 34a is formed at a position overlapping the second opening portion 32b and the third opening portion 32c adjacent to each other and formed in the flow path substrate 53 as viewed in the Z direction.

The opening portion 34a formed in the pressure chamber substrate 34 and a piezoelectric element 44 formed at a position overlapping the opening portion 34a are formed on the vibration plate 54 as viewed in the Z direction. The sealing body 46 reinforces the strength of the pressure chamber substrate 34 and the vibration plate 54, and protects the piezoelectric element 44. The sealing body 46 has a sealing body opening portion 46a. The planar shape of the sealing body opening portion 46a is a rectangular shape elongated in the Y direction.

The first circuit substrate 383u or the second circuit substrate 383v is electrically coupled to the piezoelectric element 44 via the flexible substrate 51a.

The housing portion 48 is a case for storing the ink and has a frame shape. The material of the housing portion 48 is a resin. In a case of lamination, the pressure chamber substrate 34, the vibration plate 54, and the sealing body 46 are disposed in an internal space of the housing portion 48. A through-hole 48a is formed in each of both end portions of the housing portion 48 in the X direction.

A space Rb extending in the Y direction is formed at each of both end portions of the housing portion 48 in the X direction. The space Rb communicates with the through-hole 48a. A space Ra, a liquid supply chamber 26a, and a supply flow path 26b are formed by coupling the flow path substrate 53 and the flow path sealing member 64 to each other. The space Ra is an internal space of the first opening portion 32a. The liquid supply chamber 26a is a space surrounded by the first opening portion 32a, the second opening portion 32b, a partition wall 32d that separates the first opening portion 32a and the second opening portion 32b from each other, and the flow path sealing member 64. The supply flow path 26b is an internal space of the second opening portion 32b. The space Ra communicates with the space Rb and the liquid supply chamber 26a, and the liquid supply chamber 26a communicates with the supply flow path 26b. A pressure chamber C is formed by coupling the pressure chamber substrate 34 and the vibration plate 54 to each other. The pressure chamber C is a space surrounded by the opening portion 34a and the vibration plate 54. The pressure chamber C communicates with the supply flow path 26b. A communication flow path 26c is formed by coupling the flow path substrate 53 and the nozzle plate 62 to each other. The communication flow path 26c is an internal space of the third opening portion 32c. The communication flow path 26c communicates with the pressure chamber C and the nozzle N.

The space Ra and the space Rb function as a liquid storage chamber that stores the ink supplied to the pressure chamber C. The space Rb communicates with a plurality of spaces Ra disposed side by side in the Y direction, and the ink supplied through the through-hole 48a is stored in the plurality of spaces Ra via the space Rb. The ink stored in the spaces Ra circulates through the liquid supply chamber 26a and the supply flow path 26b and is supplied to the pressure chamber C.

Each of four through-holes 48a formed in the ejecting unit 26 defines any one of the flow path of the case first supply pipe 336a, the flow path of the case first discharge pipe 337a, the flow path of the case second supply pipe 336b, and the flow path of the case second discharge pipe 337b. In this manner, the first ink is stored in one of the two spaces Rb formed in the ejecting unit 26. The second ink is stored in the other space Rb of the two spaces Rb formed in the ejecting unit 26.

In a plan view as viewed in the Z direction, the piezoelectric element 44 is disposed at a position overlapping each of the two pressure chambers C. A driving signal and a reference voltage are input to the piezoelectric element 44 via the flexible substrate 51a. The piezoelectric element 44 is deformed by the input of the driving signal and the reference voltage and the application of the voltage, the vibration plate 54 vibrates in conjunction with the deformation of the piezoelectric element 44, the pressure in the pressure chamber C fluctuates, and thus the ink is ejected from the nozzle N.

### A4. Details of Glue:

As described above, in the production of the liquid ejecting head 30, a glue is used at a plurality of sites. In the present embodiment, for example, the housing portion 48 made of resin and the flow path substrate 53, which is a silicon substrate, are bonded to each other by the glue. The flow path substrate 53, which is a silicon substrate, and the flow path sealing member 64 made of stainless steel are bonded to each other by the glue. For example, the cured substance GL liquid-tightly connects the through-hole 48a, which is a flow path defined in the housing portion 48, and the first opening portion 32a, which is a flow path defined in the flow path substrate 53. The housing portion 48 is an example of "first member," and the flow path substrate 53 is an example of "second member."

In a bonding step of the housing portion 48 and the flow path substrate 53, after the glue is applied to at least one of the housing portion 48 and the flow path substrate 53, the glue is cured at a curing temperature. When the curing temperature is relatively high, in the case of bonding different materials having a large difference in thermal expansion coefficient in particular, stress may occur in the bonded different materials. For example, when the curing temperature is 100°C or higher, the bonded member may be warped. Therefore, the curing temperature is preferably 80°C or lower, and more preferably 60°C or lower.

The coefficient of linear expansion of a thermosetting resin containing a filler is about 8 to 11 × 10⁻⁶ /K. The coefficient of linear expansion of a thermosetting resin is about 15 × 10⁻⁶ /K. The coefficient of linear expansion of silicon is about 2.6 × 10⁻⁶ /K. The coefficient of linear expansion of stainless steel is about 10 to 18 × 10⁻⁶ /K. The above values of the coefficient of linear expansion are coefficients of linear expansion at 293 K.

As described above, the ink used in the liquid ejecting apparatus 100 includes a colored ink containing a coloring material, a pretreatment ink, and a UV ink. The colored ink contains a water-soluble organic solvent such as an alkyl ether. The pretreatment ink contains an organic acid, and the pretreatment ink is acidic. The UV ink contains a monomer. Therefore, the cured substance GL of a glue is required to have resistance to these various liquids. "Having resistance" indicates that the amount of change in the adhesive strength of the cured substance GL after being brought into contact with the liquid is smaller than the initial adhesive strength of the cured substance GL. In the following description, resistance to an alkyl ether is also referred to as ether resistance, resistance to an acidic liquid is also referred to as acid resistance, and resistance to a monomer is also referred to as monomer resistance. The ether resistance, the acid resistance, and the monomer resistance are also collectively referred to as liquid resistance.

In addition, a glue having a low environmental load is required. For example, it is known that bisphenol A used in the synthesis of a glycidyl ether type epoxy resin that is commonly used as a glue and nonylphenol that can be used as an accelerator for a glue have a large environmental load. The present inventors have found a glue having a low environmental load, having a relatively low curing temperature, and having the liquid resistance.

Specifically, in the present embodiment, for example, the two-liquid mixed glue used for bonding the housing portion 48 and the flow path substrate 53 to each other is a two-liquid mixed glue containing a liquid A and a liquid B. In the following description, the two-liquid mixed glue having the characteristics of the present application is simply referred to as a glue unless otherwise specified. Further, in the following description, the liquid A, the liquid B, and the main agent refer to the liquid A, the liquid B, and the main agent constituting the two-liquid mixed glue having the characteristics of the present application unless otherwise specified.

The liquid A contains the main agent containing an epoxy resin that does not contain bisphenol and 3,4-dihydrocoumarin. The epoxy resin that does not contain bisphenol is a resin in which bisphenol is not used in the synthesis of the epoxy resin. In the present embodiment, the epoxy resin that does not contain bisphenol is N,N,N',N'-tetraglycidyl-m-xylenediamine, which is a tetrafunctional glycidyl amine type epoxy resin.

The liquid B contains an aromatic amine polymer, an alkylphenol, and at least one of 2,5-bis(aminomethyl)bicyclo [2.2.1]heptane and 2,6-bis(aminomethyl)bicyclo[2.2.1]heptane.

The aromatic amine polymer contains a formaldehyde polymer containing at least one of 2-ethylaniline and 4,4'-methylenebis(2-ethylaniline) in a repeating unit, or a formaldehyde polymer containing at least one of 2-ethyl-6-methylaniline and 4,4'-methylenebis(2-ethyl-6-methylaniline) in a repeating unit. In the present embodiment, the aromatic amine polymer is a formaldehyde polymer containing at least one of 2-ethylaniline and 4,4'-methylenebis(2-ethylaniline) in a repeating unit.

The alkylphenol is an alkylphenol (a) containing at least one ethyl group or an alkylphenol (b) in which the alkyl group has 1 to 3 carbon atoms and which contains at least one methyl group and one isopropyl group. (a) is an alkylphenol represented Formula (1) below, and (b) is an alkylphenol represented by Formula (2) below: 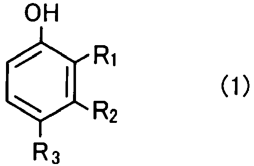 (Here, R₁, R₂, and R₃ in Formula (1) represent hydrogen or an ethyl group, and at least one of R₁, R₂, and R₃ represents an ethyl group.) 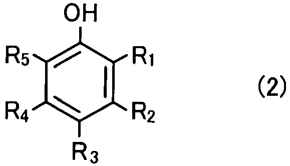 (Here, R₁, R₂, R₃, R₄, and R₅ in Formula (2) represent hydrogen or an alkyl group having 1 to 3 carbon atoms, at least one of R₁, R₂, R₃, R₄, and R₅ represents a methyl group, and at least one of R₁, R₂, R₃, R₄, and R₅ represents an isopropyl group). In the present embodiment, the alkylphenol contained in the liquid B is carvacrol represented by Formula (2).

The ratio of the ester equivalent of 3,4-dihydrocoumarin to the phenol equivalent of the alkylphenol is 4.0 or more and 12.0 or less. Here, the phenol equivalent is determined by Equation (e1) below. The ester equivalent is determined by Equation (e2) below.
$Phenol equivalent = molecular weight of phenol / number of hydroxy groups$ (e1)
$Ester equivalent = molecular weight of lactone / 2 .$ (e2)

It is considered that 3,4-dihydrocoumarin, which is a lactone, causes a ring-opening reaction in a curing reaction. Therefore, as will be described below in detail, in Equation (e2), the value by which the molecular weight of the lactone is divided is set to "2."

The epoxy equivalent described below is determined by Equation (e3) below. The amine equivalent described below is determined by Equation (e4) below.$Epoxy equivalent = molecular weight of epoxy resin / number of epoxy groups$ (e3) $Amine equivalent = molecular weight of amine / number of active hydrogens of amine$

The glue having the above characteristics has a low environmental load, has excellent liquid resistance, and is cured at a relatively low curing temperature. Further, 2,5-bis(aminomethyl)bicyclo[2.2.1]heptane and 2,6-bis(aminomethyl)bicyclo[2.2.1]heptane are isomers, and will also be referred to as bis(aminomethyl)norbornane in the following description.

The liquid A contains a so-called bisphenol-free epoxy resin which does not contain bisphenol as the main agent. Accordingly, the environmental load can be reduced as compared with a glycidyl ether type epoxy resin which is an epoxy resin containing bisphenol. Therefore, the glue is particularly useful when printing is performed on the medium 12 used as a packaging material for food using the liquid ejecting apparatus 100.

The reactivity between the bisphenol-free epoxy resin and the aromatic amine polymer is low. The present inventors have found that the reactivity can be improved by adding the alkylphenol, 3,4-dihydrocoumarin, and bis(aminomethyl)norbornane to the bisphenol-free epoxy resin and the aromatic amine polymer. As a result, the glue can be cured at a relatively low curing temperature. The curing temperature in the present embodiment is about 80°C or lower. Since the glue of the present application performs the curing reaction at a relatively low curing temperature, which is lower than 100°C, even when different materials are bonded to each other, the stress generated in the different materials after bonding can be reduced.

The ratio of the ester equivalent of 3,4-dihydrocoumarin to the phenol equivalent of the alkylphenol is 4.0 or more and 12.0 or less. As a result, the liquid resistance of the cured substance GL can be improved, and a glue in which the liquid A and the liquid B are easily kneaded can be provided.

A plurality of phenols with high safety are present in the phenol (a) or the phenol (b), as represented by, for example, carvacrol. That is, the present glue can be prepared by using a component containing no reproductive toxic substance, such as nonylphenol, and is thus safer.

In the present embodiment, the ratio of the epoxy equivalent of the epoxy resin that does not contain bisphenol to the ester equivalent of 3,4-dihydrocoumarin is 3.33 or more and 6.00 or less. This makes it possible to provide a glue that can be stored at room temperature for a long period of time and has excellent liquid resistance.

In the present embodiment, the sum of the ratio of the phenol equivalent of the phenol (a) or the phenol (b) to the amine equivalent of bis(aminomethyl)norbornane and the ratio of the ester equivalent of 3,4-dihydrocoumarin to the amine equivalent of bis(aminomethyl)norbornane is 0.75 or more and 1.167 or less. In this manner, the strength of the cured substance GL can be improved, and the liquid resistance thereof can be improved.

In the present embodiment, the sum of the ratio of the amine equivalent of the aromatic amine polymer to the epoxy equivalent of the epoxy resin that does not contain bisphenol and the ratio of the amine equivalent of bis(aminomethyl)norbornane to the epoxy equivalent of the epoxy resin that does not contain bisphenol is 1.16 or more and 1.40 or less. In this manner, the strength of the cured substance GL can be improved, and the liquid resistance thereof can be improved.

As described above, the two-liquid mixed glue having the characteristics described in the present embodiment has a low environmental load, has a low curing temperature, and has excellent liquid resistance. Since the curing temperature is low, even when different materials are bonded to each other, the stress generated in the different materials after bonding can be reduced. Further, since the two-liquid mixed glue has excellent liquid resistance, even when inks having various properties are used as the liquid ejected from the nozzle N, it is possible to inhibit a decrease in the adhesive strength of the cured substance GL of the two-liquid mixed glue and to improve the reliability of the liquid ejecting head 30. In addition, since the environmental load is low, the printed material on which printing is performed using the liquid ejecting apparatus 100 can be used at ease. In addition, since the two-liquid mixed glue is easily kneaded and has excellent storability at room temperature, it is possible to improve work efficiency in a production process of kneading and applying the liquid A and the liquid B and to reduce time and effort required for storage.

The two-liquid mixed glue used for producing the liquid ejecting head 30 is not limited to the above-described embodiment. Specifically, the epoxy resin that does not contain bisphenol contained in the main agent is not limited to N,N,N',N'-tetraglycidyl-m-xylenediamine. The epoxy resin that does not contain bisphenol may be, for example, 4,4'-methylenebis(N,N-diglycidylaniline). The aromatic amine polymer is not limited to the formaldehyde polymer containing at least one of 2-ethylaniline and 4,4'-methylenebis(2-ethylaniline) in a repeating unit. The phenol (a) or the phenol (b) is not limited to carvacrol. For example, the phenol (a) may be 4-ethylphenol. For example, the phenol (b) may be 2-hydroxy-para-cymene, thymol, 3-hydroxy-para-cymene, ortho-cymen-5-ol, or the like. Even when these components are used, each of these components has the same chemical properties as the chemical properties of the corresponding components of the above-described embodiment, and thus a two-liquid mixed glue that exhibits the same effects as the effects of the above-described embodiment can be prepared.

The ratio of the epoxy equivalent of the epoxy resin that does not contain bisphenol to the ester equivalent of 3,4-dihydrocoumarin is not limited to 3.33 or more and 6.00 or less. The sum of the ratio of the phenol equivalent of the phenol (a) or the phenol (b) to the amine equivalent of bis(aminomethyl)norbornane and the ratio of the ester equivalent of 3,4-dihydrocoumarin to the amine equivalent of bis(aminomethyl)norbornane is not limited to 0.75 or more and 1.167 or less. The sum of the ratio of the amine equivalent of the aromatic amine polymer to the epoxy equivalent of the epoxy resin that does not contain bisphenol and the ratio of the amine equivalent of bis(aminomethyl)norbornane to the epoxy equivalent of the epoxy resin that does not contain bisphenol is not limited to 1.16 or more and 1.40 or less.

### B. Test Examples:

### B1. List of Components:

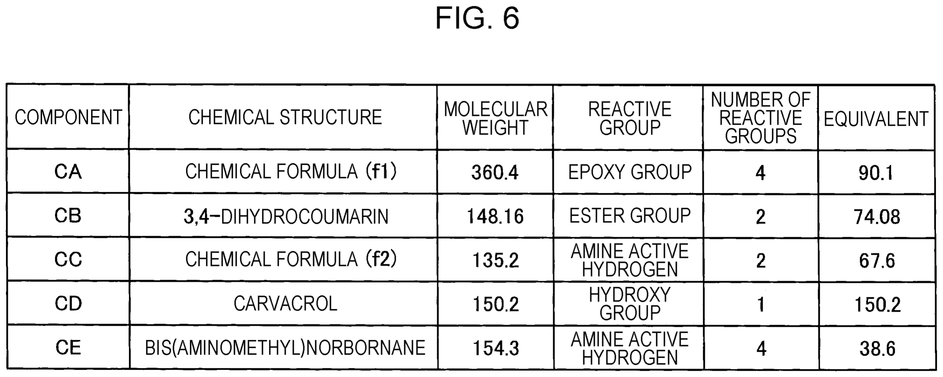

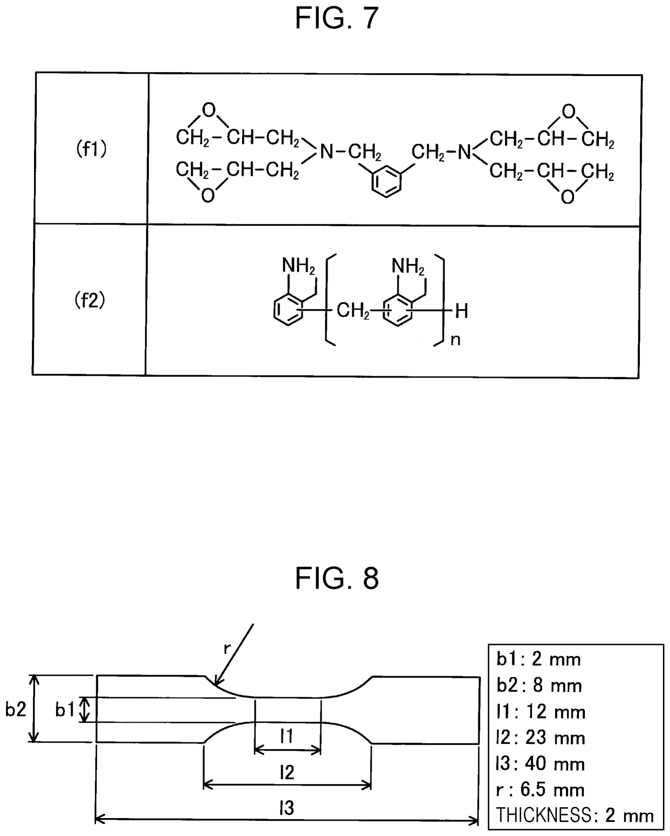

FIG. 6 shows a list of components used in the tests. FIG. 7 shows chemical structural formulae of Chemical Formula (f1) and Chemical Formula (f2). In the present specification, each component is specified by using a unique name provided for each component.

The CAS registry number of the component CA is 63738-22-7. As shown in Chemical Formula (f1) of FIG. 7, the component CA is N,N,N',N'-tetraglycidyl-m-xylenediamine, which is an epoxy resin having four functional groups. In the tests, TETRAD-X (registered trademark/product name) manufactured by Mitsubishi Gas Chemical Company, Inc. was used as the component CA.

The component CB is 3,4-dihydrocoumarin as a lactone, the CAS registry number of which is 119-84-6. In the tests, a product manufactured by Tokyo Chemical Industry Co., Ltd. was used as the component CB.

The CAS registry number of the component CC is 69178-41-2. As shown in Chemical Formula (f2) of FIG. 7, the component CC is an aromatic amine polymer. In Formula (f2), n is an integer of 2 or more. In the tests, KAYAHARD (registered trademark) AA (product name) manufactured by Nippon Kayaku Co., Ltd. was used as the component CC.

The component CD is carvacrol as a phenol, the CAS registry number of which is 499-75-2. In the tests, a product manufactured by Tokyo Chemical Industry Co., Ltd. was used as the component CD.

The component CE is bis(aminomethyl)norbornane as an alicyclic amine, the CAS registry number of which is 56602-77-8. The component CE is an isomeric mixture containing 2,5-bis(aminomethyl)bicyclo [2.2.1]heptane and 2,6-bis(aminomethyl)bicyclo[2.2.1]heptane. In the tests, a product manufactured by Tokyo Chemical Industry Co., Ltd. was used as the component CE.

The molecular weight, the reactive group, the number of reactive groups, and the equivalent of each component are as shown in FIG. 6. In each of the tests described below, the mass was calculated using the equivalent mass shown in FIG. 6 to obtain the target equivalent ratio. The value of the number of reactive groups of FIG. 6 matches the value that divides the molecular weight in Equation (e1) to Equation (e4) above that determine the equivalents. As described above, since it is considered that the component CB (3,4-dihydrocoumarin) undergoes a ring-opening reaction in the curing reaction, the number of reactive groups is set to "2."

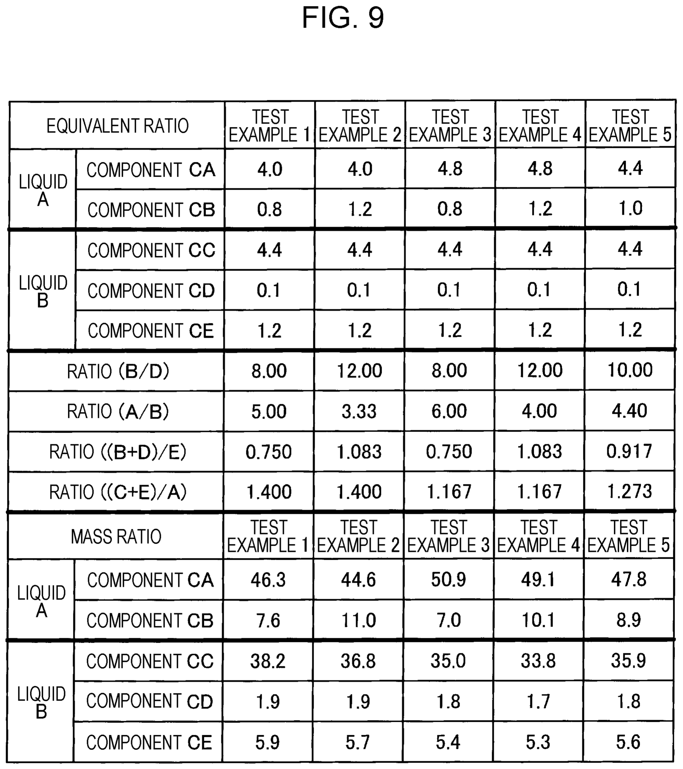

Cured substances were produced by changing the components constituting each of the liquid A and the liquid B and the equivalent ratios of the components contained in each liquid, and a test for evaluating the cured substances was performed. FIG. 8 is a view for explaining an evaluation method. FIG. 9 to FIG. 11 are views collectively showing the components and the equivalent ratios and mass ratios of the components in the tests. The mass ratio is equal to the mass of each component satisfying the equivalent ratio when the total mass obtained by adding the mass of all components is set to 100 g. The mass ratios shown in each of the tables of FIG. 9 to FIG. 11 are substantially the same as the equivalent ratios. In the present specification, the mass ratios are also described for reference.

In the tests, two kinds of cured substances with different curing conditions were produced. The first curing condition includes a curing temperature of 60°C and a curing time of 24 hours. The second curing condition includes a curing temperature of 80°C and a curing time of 10 hours.

### B2. Description of Evaluation:

### B2-1. Preparation of Evaluation Object:

First, a cured substance having a dumbbell shape shown in FIG. 8 was prepared. The dumbbell shape is based on the plastic test piece type CP of Japanese Industrial Standard JIS K 7139. As the details of the preparation method, first, cutting processing was performed to prepare a mold having a dumbbell shape into a polytetrafluoroethylene (PTFE) sheet having a thickness of 3 mm.

Next, a mixture of the liquid A and the liquid B was prepared. Here, a method of preparing a cured substance will be described with reference to Test Example 1. In the present test, the liquid A and the liquid B were prepared, and each of the liquid A and the liquid B was stored in a refrigerator or a freezer. Further, in the preparation of each test example, a method of returning the liquid A and the liquid B to room temperature and kneading the liquids was employed. Further, when the components of the liquid A are mixed, a change rate, which is a change amount of the viscosity of the liquid A with respect to the time due to the chemical reaction between the components, may increase. The same applies to the liquid B. Therefore, a treatment of carrying out the chemical reaction until the change rate of the viscosity becomes slow is usually performed. As described above, a treatment of allowing the mixture of the components to stand at the reaction temperature until the chemical reaction is substantially completed is also referred to as an adduct treatment or an aging treatment. By performing the adduct treatment, even when each of the liquid A and the liquid B is returned to room temperature, a sudden change in viscosity of each liquid is unlikely to occur, and thus there are advantages of, for example, satisfactorily performing the mixing operation of the liquid A and the liquid B and the subsequent coating operation. Even in the present test, a method of storing each of the liquid A and the liquid B in a refrigerator or a freezer after the adduct treatment was performed was employed.

In a case of preparation of the liquid A, first, the component CA, which are epoxy resins, and the component CB were mixed at the equivalent ratio and the mass ratio shown in FIG. 9, and the mixture was allowed to stand at 80°C for 2 hours to be partially reacted as the adduct treatment. Thereafter, the prepared liquid A was stored in a refrigerator or a freezer.

In a case of preparation of the liquid B, the component CC, which is an aromatic amine, and the component CD, which is an alkylphenol, were mixed at the equivalent ratio and the mass ratio shown in FIG. 9, and allowed to stand at room temperature for 30 minutes. Then, the component CE was mixed with this mixture, and the mixture was allowed to stand at 80°C for 2 hours to be reacted as the adduct treatment. Thereafter, the prepared liquid B was stored in a refrigerator or a freezer.

As described above, after each of the liquid A and the liquid B was returned to room temperature, the liquids were mixed. Further, in the present test, a method of performing the adduct treatment to prepare the liquid A and the liquid B and storing the liquids in a refrigerator or a freezer was employed, but the method is not necessarily be employed. As described above, the adduct treatment is performed to improve the workability of an operation of kneading the liquid A and the liquid B, and even when the adduct treatment is omitted, the properties such as liquid resistance and curability of the glue are not affected. In addition, a method of storing the liquid A and the liquid B in a refrigerator or a freezer is not essential. The purpose of storing the liquid A and the liquid B in a refrigerator or a freezer is to inhibit the progress of the chemical reaction of each of the liquid A and the liquid B. Therefore, when the liquid A and the liquid B each prepared are mixed early or when the liquid A or the liquid B has a property of low reactivity even at room temperature, it is not necessary to store the liquid A and the liquid B in a refrigerator or a freezer.

Further, even in Test Example 2 to Test Example 16, the preparation method for a mixture of the liquid A and the liquid B is the same as the preparation method in Test Example 1.

A mixture of the liquid A and the liquid B was poured into the dumbbell-shaped mold prepared, and the mixture overflowing was removed with a PTFE squeegee. When the cured substance was produced under the first curing condition, a PTFE sheet in which the mixture of the liquid A and the liquid B was accommodated in the mold was put into a constant temperature bath at room temperature, and the constant temperature bath was heated to 60°C after 30 minutes. Thereafter, the mixture of the liquid A and the liquid B was cured by being heated in the constant temperature bath at 60°C for 24 hours. After the heating was stopped, the cured substance was allowed to stand for 5 hours while being placed in the constant temperature bath, and the cured substance was removed from the constant temperature bath and placed under ambient conditions after the temperature of the constant temperature bath was lowered to about 40°C. Further, the PTFE sheet was deformed to take out the cured substance.

When the cured substance was produced under the second curing condition, a PTFE sheet in which the mixture of the liquid A and the liquid B was accommodated in the mold was put into a constant temperature bath at room temperature, and the constant temperature bath was heated to 80°C after 30 minutes. Thereafter, the mixture of the liquid A and the liquid B was cured by being heated in the constant temperature bath at 80°C for 10 hours. After the heating was stopped, the cured substance was allowed to stand for 5 hours while being placed in the constant temperature bath, and the cured substance was removed from the constant temperature bath and placed under ambient conditions after the temperature of the constant temperature bath was lowered to about 40°C. Further, the PTFE sheet was deformed to take out the cured substance.

Next, the prepared cured substance was immersed in an evaluation liquid for 2 weeks. Specifically, the cured substance was put into a 30 ml LABORAN (registered trademark) screw tube bottle, the evaluation liquid was poured so that the entire cured substance was immersed, the bottle was sealed, and the bottle was allowed to stand in a constant temperature bath at 60°C for 2 weeks.

As the evaluation liquid, three kinds of evaluation liquids of a first evaluation liquid to a third evaluation liquid were used. The first evaluation liquid is a liquid that simulates the colored ink containing a coloring material used in the liquid ejecting apparatus 100. The components of the first evaluation liquid and the mass ratios of the respective components are as follows.

### First evaluation liquid

Component: mass ratio
3-Methyl-1,5-pentanediol (MPD): 10
OLFINE (registered trademark) E1010: 1
Water: 84
Diethylene glycol monobutyl ether: 5

The second evaluation liquid is a liquid that simulates the acidic pretreatment ink used in the liquid ejecting apparatus 100. The components of the second evaluation liquid and the mass ratios of the respective components are as follows. Lactic acid contained in the second evaluation liquid is an organic acid, and the pH of the evaluation liquid is about 2.

### Second evaluation liquid

Component: mass ratio
3-Methyl-1,5-pentanediol (MPD): 10
OLFINE (registered trademark) E1010: 1
Water: 84
Lactic acid: 5

The third evaluation liquid is a liquid that simulates the UV ink used in the liquid ejecting apparatus 100. The components of the third evaluation liquid and the mass ratios of the respective components are as follows.

### Third evaluation liquid

Component: mass ratio
Phenoxyethyl acrylate (PEA): 80
4-Hydroxybutyl acrylate (4HBA): 20

The above PEA is a monomer, the CAS registry number of which is 48145-04-6. The above 4HBA is a monomer, the CAS registry number of which is 2478-10-6.

Next, the cured substance was separated from the evaluation liquid using an aspirator type filtration device. As a filter for filtration, a PTFE membrane filter having a pore size of 10 µm was used. The remaining cured substance on the funnel side was washed with pure water and ethanol in a state of containing minute objects of the cured substance, and dried at 25°C for 1 day. The cured substance after drying was evaluated as follows. In the following description, the dried cured substance may be referred to as an evaluation object.

### B2-2. Evaluation (Tensile Breaking Strength):

The tensile strength of the evaluation object was measured using a tensile testing device. The tensile testing device used was STB-1225S (manufactured by A and D Company, Limited). Specifically, a parallel tightening type jaw was attached to each of both wide end portions of the dumbbell-shaped cured substance, the evaluation object was pulled at a rate of 0.5 mm/min until the cured substance was broken, and the tensile load at the time of breaking was measured. In addition, the area of the broken surface was measured and acquired with a digital microscope VHX-6000 (manufactured by Keyence Corporation). The breaking strength was calculated by Equation (e5) below using the obtained tensile load and the area of the broken surface.$Breaking strength \left[MPa\right] = tensile load \left[N\right] / area of broken portion \left[{mm}^{2}\right]$ (e5)

The better the liquid resistance of the cured substance, the larger the breaking strength. Thus, as described below, the breaking strength was evaluated by five ranks of S, AA, A, B, and C. The ranks C, B, A, AA, and S are arranged in an ascending order of the excellence of the liquid resistance.
S: The breaking strength is 80 MPa or more.
AA: The breaking strength is 60 MPa or more and less than 80 MPa.
A: The breaking strength is 40 MPa or more and less than 60 MPa.
B: The breaking strength is 20 MPa or more and less than 40 MPa.
C: The breaking strength is less than 20 MPa.

The tensile strength of the cured substance before immersion in the evaluation liquid was also measured in the same manner as described above.

Hereinafter, the evaluation of the tensile strength of the cured substance with the curing condition being the first curing condition before immersion in the evaluation liquid (initial) is referred to as "Evaluation A(1)." For the evaluation object with the curing condition being the first curing condition, the evaluation of the tensile strength for the evaluation object with the first evaluation liquid used as the evaluation liquid is referred to as "Evaluation B(1)." For the evaluation object with the curing condition being the first curing condition, the evaluation of the tensile strength for the evaluation object with the second evaluation liquid used as the evaluation liquid is referred to as "Evaluation C(1)." For the evaluation object with the curing condition being the first curing condition, the evaluation of the tensile strength for the evaluation object with the third evaluation liquid used as the evaluation liquid is referred to as "Evaluation D(1)."

The evaluation of the tensile strength of the cured substance with the curing condition being the second curing condition before immersion in the evaluation liquid is referred to as "Evaluation A(2)." For the evaluation object with the curing condition being the second curing condition, the evaluation of the tensile strength for the evaluation object with the first evaluation liquid used as the evaluation liquid is referred to as "Evaluation B(2)." For the evaluation object with the curing condition being the second curing condition, the evaluation of the tensile strength for the evaluation object with the second evaluation liquid used as the evaluation liquid is referred to as "Evaluation C(2)." For the evaluation object with the curing condition being the second curing condition, the evaluation of the tensile strength for the evaluation object with the third evaluation liquid used as the evaluation liquid is referred to as "Evaluation D(2)."

The relation between the above evaluation and each condition is listed below:
(Evaluation) (Curing condition) (Evaluation liquid) Evaluation A(1) First (60°C, 24 hours) Initial Evaluation B(1) First (60°C, 24 hours) First evaluation liquid (ether) Evaluation C(1) First (60°C, 24 hours) Second evaluation liquid (acidic) Evaluation D(1) First (60°C, 24 hours) Third evaluation liquid (monomer) Evaluation A(2) Second (80°C, 10 hours) Initial Evaluation B(2) Second (80°C, 10 hours) First evaluation liquid (ether) Evaluation C(2) Second (80°C, 10 hours) Second evaluation liquid (acidic) Evaluation D(2) Second (80°C, 10 hours) Third evaluation liquid (monomer)

FIG. 9 to FIG. 11 show the values of the ratio (B/D), the values of the ratio (A/B), the values of the ratio ((B + D)/E), and the values of the ratio ((C + E)/A).

The ratio (B/D) is the ratio of the ester equivalent of the component CB to the phenol equivalent of the component CD. The ratio (A/B) is the ratio of the epoxy equivalent of the component CA to the ester equivalent of the component CB.

The ratio ((B + D)/E) is the sum of the ratio of the phenol equivalent of the component CD to the amine equivalent of the component CE and the ratio of the ester equivalent of the component CB to the amine equivalent of the component CE.

The ratio ((C + E)/A) is the sum of the ratio of the amine equivalent of the component CC to the epoxy equivalent of the component CA and the ratio of the amine equivalent of the component CE to the epoxy equivalent of the component CA.

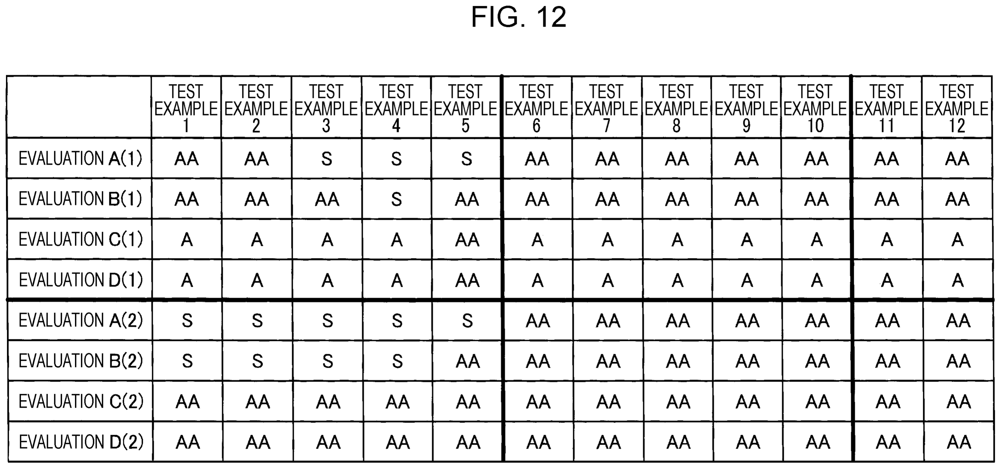

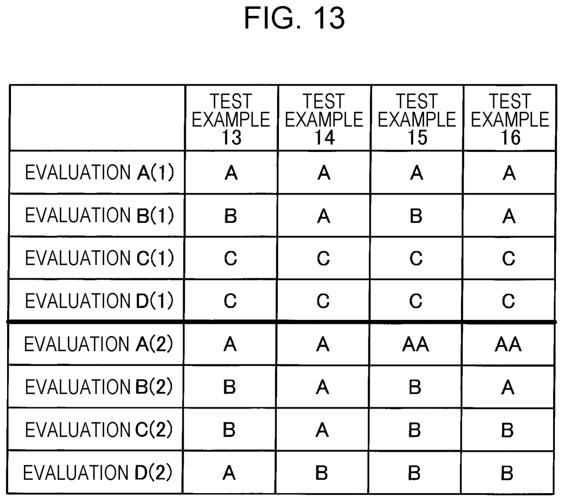

FIG. 12 is a table collectively showing the evaluation results of Test Examples of Test Example 1 to Test Example 12. FIG. 13 is a diagram collectively showing the evaluation results of Test Examples of Test Example 13 to Test Example 16.

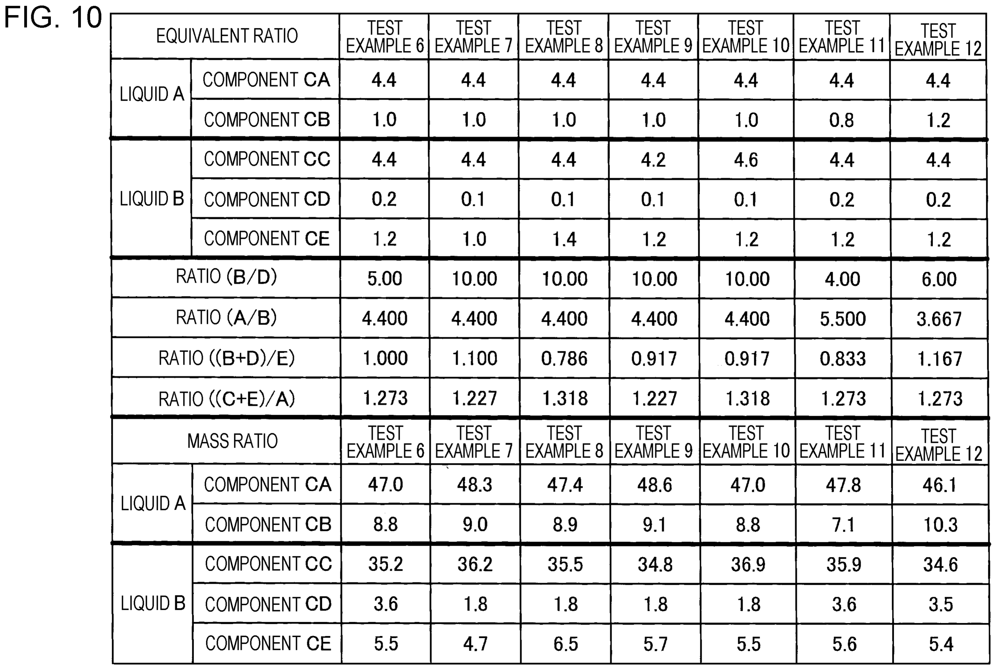

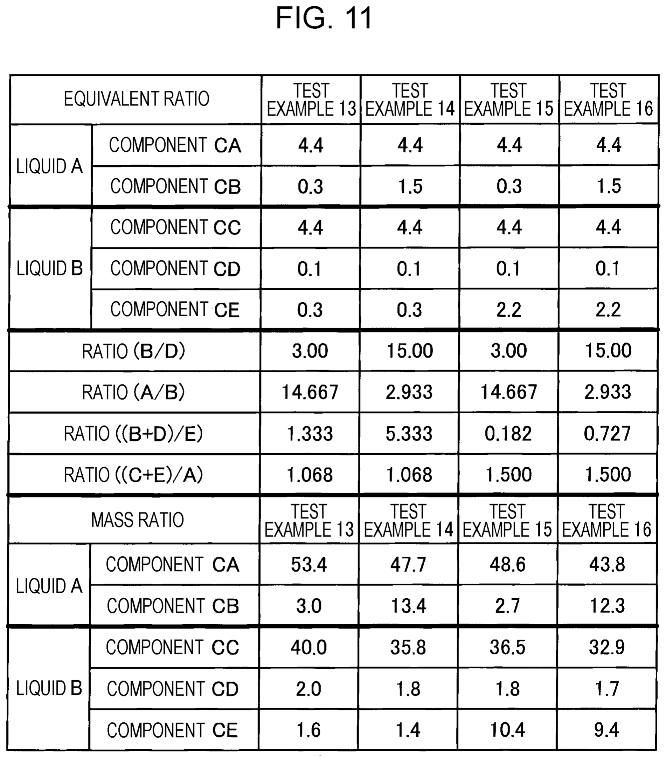

As shown in FIG. 9 and FIG. 10, the ratio (B/D) of Test Example 1 to Test Example 12 is 4.0 or more and 12.0 or less. As shown in FIG. 12, the evaluation results of Test Example 1 to Test Example 12 are Rank A or higher, which is good, in all the evaluations. In contrast, as shown in FIG. 11, the ratio (B/D) of Test Example 13 to Test Example 16 is outside the range of 4.0 or more and 12.0 or less. As shown in FIG. 13, in the evaluation results of Test Example 13 to Test Example 16, Rank B or lower is included in the evaluations excluding Evaluation A(1) and Evaluation A(2). It can be seen from this result that when the ratio (B/D) is within the range of 4.0 or more and 12.0 or less, good liquid resistance is exhibited.

In Test Example 13 and Test Example 15, the ratio (B/D) is smaller than 4.0. That is, the amount of the component CD (carvacrol) is larger than the amount of the component CB (3,4-dihydrocoumarin). Here, the component CD (carvacrol) has one hydroxy group that contributes to the chemical reaction. Meanwhile, the component CB (3,4-dihydrocoumarin) generates two binding sites in the ring-opening reaction. The two bonding sites are specifically two including an oxygen atom in the ring and a carbon atom bonded to the oxygen atom with a double bond. Therefore, the component CD (carvacrol) may reduce the degree of polymerization of the cured substance in the chemical reaction between the liquid A and the liquid B. The component CB (3,4-dihydrocoumarin) may increase the degree of polymerization of the cured substance in the chemical reactions between the liquid A and the liquid B.

The present inventors have confirmed that when the cured substance is brought into contact with the acidic second evaluation liquid, the component CD (carvacrol) is eluted into the second evaluation liquid. Therefore, there is a possibility that the component CD (carvacrol) functions as a catalyst or an accelerator of the chemical reaction between the liquid A and the liquid B but is not incorporated into the cured substance. Even if the component CD (carvacrol) is incorporated into the cured substance, there is a possibility that since the component CD is incorporated into the terminal of the molecular chain, the component CD is separated from the molecular chain at the time of liquid contact and is eluted in the second evaluation liquid. Thus, it is considered that the component CD (carvacrol) does not contribute to an increase in the degree of polymerization of the cured substance in the chemical reaction between the liquid A and the liquid B.

The present inventors have confirmed that a mixture of the component CD (carvacrol) and the component CE (bis(aminomethyl)norbornane) is liquid. The present inventors have also confirmed that a mixture of the component CB (3,4-dihydrocoumarin) and the component CE (bis(aminomethyl)norbornane) is a white gum-like polymer compound. Therefore, in the chemical reaction between the liquid A and the liquid B, while the component CB (3,4-dihydrocoumarin) and the component CE (bis(aminomethyl)norbornane) react with each other, there is a possibility that this compound and the component CA (the epoxy resin that does not contain bisphenol) react with each other. For this reason, it is considered that the component CB and the component CE are incorporated into the molecular chain of the cured substance, not the terminal of the molecular chain.

In Test Example 13 and Test Example 15, the ratio (B/D) is smaller than 4.0. The evaluation results of Evaluation C(2) of Test Example 13 and Test Example 15 are Rank B. This is considered to be because, in Test Example 13 and Test Example 15, the amount of the component CD (carvacrol) is relatively large, and thus the degree of polymerization of the cured substance is low and the component CD (carvacrol) is easily eluted.

In Test Example 14 and Test Example 16, the ratio (B/D) is larger than 12.0. In other words, the amount of the component CB (3,4-dihydrocoumarin) is larger than the amount of the component CD (carvacrol). The component CB (3,4-dihydrocoumarin) has a lower viscosity than the component CD (carvacrol), and is a very low viscosity liquid. Therefore, when the amount of the component CB (3,4-dihydrocoumarin) is relatively large, the liquid A has a low viscosity. In this case, the difference between the viscosity of the liquid A and the viscosity of the liquid B becomes large, and it becomes difficult to mix the liquid A and the liquid B, which is not preferable. In such a case that it is difficult to mix the liquid A and the liquid B, the liquid A and the liquid B may be kneaded using a machine in the production process.

The evaluation results of Evaluation D(2) of Test Example 14 and Test Example 16 are Rank B. It can be seen from this result that when the number of sites derived from the component CB (3,4-dihydrocoumarin) increases in the cured substance, the monomer resistance of the cured substance tends to deteriorate.

As shown in FIG. 9 and FIG. 10, the ratio (A/B) of Test Example 1 to Test Example 12 is 3.33 or more and 6.0 or less. As shown in FIG. 12, the evaluation results of Test Example 1 to Test Example 12 are Rank A or higher, which is good, in all the evaluations. In contrast, as shown in FIG. 11, the ratio (A/B) of Test Example 13 to Test Example 16 is outside the range of 3.33 or more and 6.0 or less. As shown in FIG. 13, in the evaluation results of Test Example 13 to Test Example 16, Rank B or lower is included in the evaluations excluding Evaluation A(1) and Evaluation A(2). It can be seen from this result that when the ratio (A/B) is within the range of 3.33 or more and 6.0 or less, good liquid resistance is exhibited.

In Test Example 14 and Test Example 16, the ratio (A/B) is smaller than 4.0. In other words, the amount of the component CB (3,4-dihydrocoumarin) is larger than the amount of the component CA (the epoxy resin that does not contain bisphenol). When the amount of the component CB (3,4-dihydrocoumarin) is relatively large, the viscosity of the liquid A rapidly increases when the liquid A is stored at room temperature. For this reason, when the ratio (A/B) is smaller than 4.0, the storability of the liquid A at room temperature decreases, which is not preferable.

The evaluation results of Evaluation D(2) of Test Example 14 and Test Example 16 are Rank B. It can be seen from this result that when the number of sites derived from the component CB (3,4-dihydrocoumarin) increases in the cured substance, the monomer resistance of the cured substance tends to deteriorate.

In Test Example 13 and Test Example 15, the ratio (A/B) is larger than 6. In other words, the amount of the component CB (3,4-dihydrocoumarin) is smaller than the amount of the component CA (the epoxy resin that does not contain bisphenol). The evaluation results of Evaluation B(2) of Test Example 13 and Test Example 15 are Rank B. This is considered to be because when the amount of the component CB (3,4-dihydrocoumarin) is relatively small, the curing under the second curing condition does not proceed sufficiently.

As shown in FIG. 9 and FIG. 10, the ratio ((B + D)/E) of Test Example 1 to Test Example 12 is 0.75 or more and 1.167 or less. As shown in FIG. 12, the evaluation results of Test Example 1 to Test Example 12 are Rank A or higher, which is good, in all the evaluations. In contrast, as shown in FIG. 11, the ratio (A/B) of Test Example 13 to Test Example 16 is outside the range of 0.75 or more and 1.167 or less. As shown in FIG. 13, in the evaluation results of Test Example 13 to Test Example 16, Rank B or lower is included in the evaluations excluding Evaluation A(1) and Evaluation A(2). It can be seen from this result that when the ratio ((B + D)/E) is within the range of 0.75 or more and 1.167 or less, good liquid resistance is exhibited.

In Test Example 15 and Test Example 16, the ratio ((B + D)/E) is smaller than 0.75. In other words, the amount of the component CE (bis(aminomethyl)norbornane) is larger than the total amount of the component CB (3,4-dihydrocoumarin) and the component CD (carvacrol). When the amount of the component CE (bis(aminomethyl)norbornane) is relatively large, the viscosity increases in a short time when the liquid A and the liquid B are mixed, which is not preferable.

The evaluation results of Evaluation C(2) and Evaluation D(2) of Test Example 15 and Test Example 16 are all Rank B. It can be seen from this result that when the amount of the component CE ((bis(aminomethyl)norbornane)), which is not an aromatic compound, is relatively large, the acid resistance and the monomer resistance of the cured substance tend to deteriorate. In addition, when the amount of the component CE is relatively large, the reaction between the liquid A and the liquid B occurs non-uniformly, and thus it is considered that a portion having low strength is locally present in the cured substance. Therefore, it is considered that the portion having low strength causes a decrease in the acid resistance and the monomer resistance.

In Test Example 13 and Test Example 14, the ratio ((B + D)/E) is larger than 1.17. In other words, the amount of the component CE (bis(aminomethyl)norbornane) is smaller than the total amount of the component CB (3,4-dihydrocoumarin) and the component CD (carvacrol). The evaluation results of Evaluation C(1) and Evaluation D(1) of Test Example 13 and Test Example 14 are all Rank C. The evaluation results of Evaluation A(2) of Test Example 13 and Test Example 14 are Rank A, which is worse than the evaluation results of Test Example 1 to Test Example 12. The component CE (bis(aminomethyl)norbornane) is highly reactive with the component CA (the epoxy resin that does not contain bisphenol). Therefore, it is considered that the component CE contributes to the realization of the curing reaction at a low curing temperature. Therefore, it is considered that when the amount of the component CE is relatively small, the curing reaction at the curing temperature in the tests is not sufficiently performed. It is considered that since the curing reaction is not sufficiently performed under the first curing condition in particular, the acid resistance and the monomer resistance of the cured substance are significantly reduced.

As shown in FIG. 9 and FIG. 10, the ratio ((C + E)/A) of Test Example 1 to Test Example 12 is 1.16 or more and 1.40 or less. As shown in FIG. 12, the evaluation results of Evaluation A(1) and Evaluation A(2) of Test Example 1 to Test Example 12 are Rank S or Rank AA. In contrast, as shown in FIG. 11, the ratio ((C + E)/A) of Test Example 13 to Test Example 16 is outside the range of 1.16 or more and 1.40 or less. As shown in FIG. 13, in the evaluation results of Evaluation A(1) and Evaluation A(2) of Test Example 13 to Test Example 16, Rank A is included. It can be seen from this result that when the ratio ((C + E)/A) is within the range of 1.16 or more and 1.40 or less, good liquid resistance is exhibited.

It is considered that, in the curing reaction, an epoxy group contained in the component CA (the epoxy resin that does not contain bisphenol) and an amino group contained in each of the component CC (the aromatic amine polymer) and the component CE (bis(aminomethyl)norbornane) react with each other to form a crosslinked structure of the cured substance. Therefore, it is considered that when the ratio of the epoxy equivalent of the component CA to the amine equivalent of the component CC and the component CE is significantly deviated from "1," the crosslinked structure is not sufficiently formed, causing a decrease in the performance of the cured substance.

In Test Example 13 and Test Example 14, the ratio ((C + E)/A) is smaller than 1.16. In other words, the amount of the component CA (the epoxy resin that does not contain bisphenol) is larger than the total amount of the component CC (the aromatic amine polymer) and the component CE (bis(aminomethyl)norbornane). Therefore, the epoxy group of the component CA (the epoxy resin that does not contain bisphenol) remains without being reacted, and the number of crosslinking points of the cured substance decreases. Therefore, the initial breaking strength and the breaking strength after liquid contact of the cured substance decrease. In addition, when the number of crosslinking points of the cured product decreases, the glass transition temperature (Tg) of the cured substance lowers, which is not preferable.

In Test Example 15 and Test Example 16, the ratio ((C + E)/A) is larger than 1.40. In other words, the amount of the component CA (the epoxy resin that does not contain bisphenol) is smaller than the total amount of the component CC (the aromatic amine polymer) and the component CE (bis(aminomethyl)norbornane). For this reason, the amino group of the component CC and the component CE remains without being reacted, and the number of crosslinking points of the cured substance decreases. Therefore, the initial breaking strength and the breaking strength after liquid contact of the cured substance decrease. The amino group may react with the component CB(3,4-dihydrocoumarin) without reacting with the epoxy group. In this case, it is considered that the number of sites derived from the epoxy group relatively decreases in the cured substance, thus causing a decrease in the liquid resistance.

### C. Other Embodiments:

(C1) In the above-described embodiment, the embodiment in which the two-liquid mixed glue is applied to the liquid ejecting head 30 is described, but the member to which the two-liquid mixed glue is applied is not limited to the liquid ejecting head 30. In the above-described embodiment, the glue does not contain a filler, but the glue may contain a filler for viscosity adjustment.

The two-liquid mixed glue used for producing the liquid ejecting head 30 is not limited to the above-described embodiment. Specifically, the epoxy resin that does not contain bisphenol is not limited to the tetrafunctional glycidyl amine type epoxy resin. The tetrafunctional glycidyl amine type epoxy resin is not limited to N,N,N',N'-tetraglycidyl-m-xylenediamine or 4,4'-methylenebis(N,N-diglycidylaniline). The epoxy resin that does not contain bisphenol may contain a plurality of kinds of epoxy resins. Even when these components are used, each of these components has the same chemical properties as the chemical properties of the corresponding components of the above-described embodiment, and thus a two-liquid mixed glue that exhibits the same effects as the effects of the above-described embodiment can be prepared.

### D. Other Aspects

The present disclosure is not limited to the above-described embodiments, and can be realized in various configurations within the scope not departing from the concept of the present disclosure. For example, technical features in the embodiments corresponding to technical features in each aspect to be described below can be replaced or combined as appropriate to solve some or all of the problems described above, or to achieve some or all of the effects described above. In addition, unless the technical features are described as essential in the present specification, the technical features can be deleted as appropriate.
(1) According to a first aspect of the present disclosure, there is provided a liquid ejecting head that ejects a liquid from a nozzle. The liquid ejecting head includes a first member, a second member, and a cured substance of a two-liquid mixed glue that bonds the first member and the second member to each other, wherein the two-liquid mixed glue contains a liquid A containing a main agent containing an epoxy resin that does not contain bisphenol and 3,4-dihydrocoumarin, and a liquid B containing an aromatic amine polymer, an alkylphenol, and at least one of 2,5-bis(aminomethyl)bicyclo[2.2.1]heptane and 2,6-bis(aminomethyl)bicyclo[2.2.1]heptane, the alkylphenol is an alkylphenol (a) containing at least one ethyl group or an alkylphenol (b) in which the alkyl group has 1 to 3 carbon atoms and which contains at least one methyl group and one isopropyl group, and a ratio of an ester equivalent of the 3,4-dihydrocoumarin to a phenol equivalent of the alkylphenol is 4.0 or more and 12.0 or less. According to this aspect, the environmental load can be reduced by using the epoxy resin that does not contain bisphenol as the main agent. By containing 3,4-dihydrocoumarin, an alkylphenol, and at least one of 2,5-bis(aminomethyl)bicyclo[2.2.1]heptane and 2,6-bis(aminomethyl)bicyclo[2.2.1]heptane in the two-liquid mixed glue, the two-liquid mixed glue can be cured at a relatively low curing temperature. As a result, even when different materials are bonded to each other, the stress generated in the different materials after bonding can be reduced. When the ratio of the ester equivalent of 3,4-dihydrocoumarin to the phenol equivalent of the alkylphenol is 4.0 or more and 12.0 or less, the cured substance has excellent strength and has excellent liquid resistance. Therefore, it is possible to provide a highly reliable liquid ejecting head.
(2) In the above aspect, the alkylphenol may be carvacrol. In this aspect, carvacrol emits an odor that is easily preferred by humans, and thus is preferable from the viewpoint of being used in a step of producing a glue.
(3) In the above aspect, a ratio of an epoxy equivalent of the epoxy resin that does not contain bisphenol to the ester equivalent of the 3,4-dihydrocoumarin may be 3.33 or more and 6.00 or less. According to this aspect, it is possible to provide a two-liquid mixed glue that has excellent storability at room temperature and has excellent liquid resistance.
(4) In the above aspect, a sum of a ratio of the phenol equivalent of the alkylphenol to an amine equivalent of the 2,5-bis(aminomethyl)bicyclo[2.2.1]heptane and the 2,6-bis(aminomethyl)bicyclo[2.2.1]heptane and a ratio of the ester equivalent of the 3,4-dihydrocoumarin to the amine equivalent of the 2,5-bis(aminomethyl)bicyclo[2.2.1]heptane and 2,6-bis(aminomethyl)bicyclo[2.2.1]heptane may be 0.75 or more and 1.167 or less. According to this aspect, it is possible to provide a two-liquid mixed glue that is easy to handle and has excellent liquid resistance.
(5) In the above aspect, a sum of a ratio of an amine equivalent of the aromatic amine polymer to an epoxy equivalent of the epoxy resin that does not contain bisphenol and a ratio of the amine equivalent of the 2,5-bis(aminomethyl)bicyclo[2.2.1]heptane and the 2,6-bis(aminomethyl)bicyclo[2.2.1]heptane to the epoxy equivalent of the epoxy resin that does not contain bisphenol may be 1.16 or more and 1.40 or less. According to this aspect, it is possible to provide a cured substance that has excellent strength and has excellent liquid resistance.
(6) In the above aspect, the aromatic amine polymer may contain a formaldehyde polymer containing at least one of 2-ethylaniline and 4,4'-methylenebis(2-ethylaniline) in a repeating unit or a formaldehyde polymer containing at least one of 2-ethyl-6-methylaniline and 4,4'-methylenebis(2-ethyl-6-methylaniline) in a repeating unit.
(7) In the above aspect, (a) may be an alkylphenol represented by Formula (1) above and (b) may be an alkylphenol represented by Formula (2) above.
   (Here, R₁, R₂, and R₃ in Formula (1) represent hydrogen or an ethyl group, and at least one of R₁, R₂, and R₃ represents an ethyl group.)
   (Here, R₁, R₂, R₃, R₄, and R₅ in Formula (2) represent hydrogen or an alkyl group having 1 to 3 carbon atoms, at least one of R₁, R₂, R₃, R₄, and R₅ represents a methyl group, and at least one of R₁, R₂, R₃, R₄, and R₅ represents an isopropyl group).
(8) In the above aspect, the epoxy resin that does not contain bisphenol may be a tetrafunctional glycidyl amine type epoxy resin.
(9) In the above aspect, the tetrafunctional glycidyl amine type epoxy resin may be at least one of N,N,N',N'-tetraglycidyl-m-xylenediamine and 4,4'-methylenebis(N,N-diglycidyl aniline).
(10) In the above aspect, each of the first member and the second member may define a flow path that communicates with the nozzle and through which the liquid flows, and the cured substance may liquid-tightly connect the flow path of the first member and the flow path of the second member to each other.
(11) According to a second aspect of the present disclosure, there is provided a two-liquid mixed glue. The two-liquid mixed glue contains a liquid A containing a main agent containing an epoxy resin that does not contain bisphenol and 3,4-dihydrocoumarin, and a liquid B containing an aromatic amine polymer, an alkylphenol, and at least one of 2,5-bis(aminomethyl)bicyclo[2.2.1]heptane and 2,6-bis(aminomethyl)bicyclo[2.2.1]heptane, wherein the alkylphenol is an alkylphenol (a) containing at least one ethyl group or an alkylphenol (b) in which the alkyl group has 1 to 3 carbon atoms and which contains at least one methyl group and one isopropyl group, and a ratio of an ester equivalent of the 3,4-dihydrocoumarin to a phenol equivalent of the alkylphenol is 4.0 or more and 12.0 or less. According to this aspect, the environmental load can be reduced by using the epoxy resin that does not contain bisphenol as the main agent. By containing 3,4-dihydrocoumarin, an alkylphenol, and at least one of 2,5-bis(aminomethyl)bicyclo[2.2.1]heptane and 2,6-bis(aminomethyl)bicyclo[2.2.1]heptane in the two-liquid mixed glue, the two-liquid mixed glue can be cured at a relatively low curing temperature. As a result, even when different materials are bonded to each other, the stress generated in the different materials after bonding can be reduced. When the ratio of the ester equivalent of 3,4-dihydrocoumarin to the phenol equivalent of the alkylphenol is 4.0 or more and 12.0 or less, the cured substance has excellent strength and has excellent liquid resistance.
(12) In the above aspect, (a) may be an alkylphenol represented by Formula (1) above and (b) may be an alkylphenol represented by Formula (2) above.
   (Here, R₁, R₂, and R₃ in Formula (1) represent hydrogen or an ethyl group, and at least one of R₁, R₂, and R₃ represents an ethyl group.)
   (Here, R₁, R₂, R₃, R₄, and R₅ in Formula (2) represent hydrogen or an alkyl group having 1 to 3 carbon atoms, at least one of R₁, R₂, R₃, R₄, and R₅ represents a methyl group, and at least one of R₁, R₂, R₃, R₄, and R₅ represents an isopropyl group).

## Claims

1. A liquid ejecting head configured to eject a liquid from a nozzle, the liquid ejecting head comprising:
a first member;
a second member; and
a cured substance of a two-liquid mixed glue that glues the first member and the second member to each other, wherein
the two-liquid mixed glue contains a liquid A containing a main agent containing an epoxy resin that does not contain bisphenol and 3,4-dihydrocoumarin, and a liquid B containing an aromatic amine polymer, an alkylphenol, and at least one of 2,5-bis(aminomethyl)bicyclo[2.2.1]heptane and 2,6-bis(aminomethyl)bicyclo[2.2.1]heptane,
the alkylphenol is an alkylphenol (a) containing at least one ethyl group or an alkylphenol (b) in which the alkyl group has 1 to 3 carbon atoms and which contains at least one methyl group and one isopropyl group, and
a ratio of an ester equivalent of the 3,4-dihydrocoumarin to a phenol equivalent of the alkylphenol is 4.0 or more and 12.0 or less.

2. The liquid ejecting head according to claim 1, wherein the alkylphenol is carvacrol.

3. The liquid ejecting head according to claim 1, wherein a ratio of an epoxy equivalent of the epoxy resin that does not contain bisphenol to the ester equivalent of the 3,4-dihydrocoumarin is 3.33 or more and 6.00 or less.

4. The liquid ejecting head according to claim 1, wherein a sum of a ratio of the phenol equivalent of the alkylphenol to an amine equivalent of the 2,5-bis(aminomethyl)bicyclo[2.2.1]heptane and the 2,6-bis(aminomethyl)bicyclo[2.2.1]heptane and a ratio of the ester equivalent of the 3,4-dihydrocoumarin to the amine equivalent of the 2,5-bis(aminomethyl)bicyclo[2.2.1]heptane and the 2,6-bis(aminomethyl)bicyclo[2.2.1]heptane is 0.75 or more and 1.167 or less.

5. The liquid ejecting head according to claim 1, wherein a sum of a ratio of an amine equivalent of the aromatic amine polymer to an epoxy equivalent of the epoxy resin that does not contain bisphenol and a ratio of the amine equivalent of the 2,5-bis(aminomethyl)bicyclo[2.2.1]heptane and the 2,6-bis(aminomethyl)bicyclo[2.2.1]heptane to the epoxy equivalent of the epoxy resin that does not contain bisphenol is 1.16 or more and 1.40 or less.

6. The liquid ejecting head according to claim 1, wherein the aromatic amine polymer contains a formaldehyde polymer containing at least one of 2-ethylaniline and 4,4'-methylenebis(2-ethylaniline) in a repeating unit or a formaldehyde polymer containing at least one of 2-ethyl-6-methylaniline and 4,4'-methylenebis(2-ethyl-6-methylaniline) in a repeating unit.

7. The liquid ejecting head according to claim 1, wherein (a) is an alkylphenol represented by Formula (1) below and (b) is an alkylphenol represented by Formula (2) below: 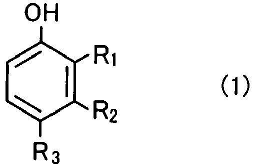 (Here, R₁, R₂, and R₃ in Formula (1) represent hydrogen or an ethyl group, and at least one of R₁, R₂, and R₃ represents an ethyl group.) 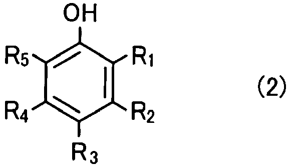 (Here, R₁, R₂, R₃, R₄, and R₅ in Formula (2) represent hydrogen or an alkyl group having 1 to 3 carbon atoms, at least one of R₁, R₂, R₃, R₄, and R₅ represents a methyl group, and at least one of R₁, R₂, R₃, R₄, and R₅ represents an isopropyl group).

8. The liquid ejecting head according to claim 1, wherein the epoxy resin that does not contain bisphenol is a tetrafunctional glycidyl amine type epoxy resin.

9. The liquid ejecting head according to claim 8, wherein the tetrafunctional glycidyl amine type epoxy resin is at least one of N,N,N',N'-tetraglycidyl-m-xylenediamine and 4,4'-methylenebis(N,N-diglycidyl aniline).

10. The liquid ejecting head according to claim 1, wherein
each of the first member and the second member defines a flow path that communicates with the nozzle and through which the liquid flows, and
the cured substance liquid-tightly connects the flow path of the first member and the flow path of the second member to each other.

11. A two-liquid mixed glue comprising:
a liquid A containing a main agent containing an epoxy resin that does not contain bisphenol and 3,4-dihydrocoumarin; and
a liquid B containing an aromatic amine polymer, an alkylphenol, and at least one of 2,5-bis(aminomethyl)bicyclo[2.2.1]heptane and 2,6-bis(aminomethyl)bicyclo[2.2.1]heptane, wherein
the alkylphenol is an alkylphenol (a) containing at least one ethyl group or an alkylphenol (b) in which the alkyl group has 1 to 3 carbon atoms and which contains at least one methyl group and one isopropyl group, and
a ratio of an ester equivalent of the 3,4-dihydrocoumarin to a phenol equivalent of the alkylphenol is 4.0 or more and 12.0 or less.

12. The two-liquid mixed glue according to claim 11, wherein (a) is an alkylphenol represented by Formula (1) below and (b) is an alkylphenol represented by Formula (2) below: 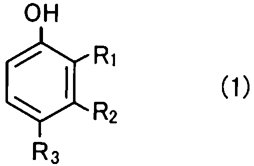 (Here, R₁, R₂, and R₃ in Formula (1) represent hydrogen or an ethyl group, and at least one of R₁, R₂, and R₃ represents an ethyl group.) 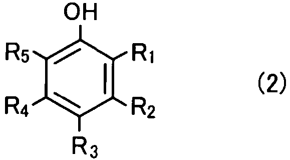 (Here, R₁, R₂, R₃, R₄, and R₅ in Formula (2) represent hydrogen or an alkyl group having 1 to 3 carbon atoms, at least one of R₁, R₂, R₃, R₄, and R₅ represents a methyl group, and at least one of R₁, R₂, R₃, R₄, and R₅ represents an isopropyl group).
